# EUROPEAN PATENT SPECIFICATION

(11) **EP 1 411 428 B1**
(45) Date of publication and mention of the grant of the patent: **24.10.2007**
(21) Application number: 03016334.9
(22) Date of filing: 18.07.2003
(51) Int. Cl.: G06F 9/445

(54) **A method for setting configuration information of a storage device**
Methode zum Setzen der Konfigurationsinformationen eines Speichergerätes
Procédé pour établir des informations de configuration pour un dispositif de stockage

(30) Priority: 18.10.2002 JP 2002303718
(43) Date of publication of application: 21.04.2004
(73) Proprietor: Hitachi, Ltd., Chiyoda-ku, Tokyo 101-8010 (JP)
(72) Inventor: Kishimoto, Toshimichi, Hitachi, Ltd., 1-chome, Chiyoda-ku, Tokyo 100-8220 (JP); Igarashi, Yoshinori, Hitachi, Ltd., 1-chome, Chiyoda-ku, Tokyo 100-8220 (JP); Yagi, Shuichi, Hitachi, Ltd., 1-chome, Chiyoda-ku, Tokyo 100-8220 (JP)
(74) Representative: Strehl Schübel-Hopf & Partner

(56) References cited:
- EP-A- 1 085 406
- US-A- 6 009 466
- US-A1- 2002 080 417
- US-A1- 2002 114 453

## Description

### CROSS-REFERENCE TO RELATED APPLICATIONS

This application claims the right of priority based on Japanese Patent Application No. 2002-303718 filed on October 18, 2002 and cites the application in the specification of this application.

### BACKGROUND OF THE INVENTION

### FIELD OF THE INVENTION

The present invention relates to a method of setting configuration information of an information processing apparatus, and more particular, to setting and modification of a configuration information of a storage. Also, the invention relates to a storage device capable of setting such configuration information.

### DESCRIPTION OF THE RELATED ART

Information processing apparatuses or the like becomes complex in system environment from day to day, and various proposals have been presented to simplify setting operations in such complex information processing apparatuses.

Setting of configuration information (for example, path definition, creation of logic volume, physical format, security information) of a storage being one of information processing apparatuses involves the risk of data loss due to an increase in quantity of setting operations and wrong setting made by supervisors because the apparatuses have been made big and complex.

JP-A-5-128032 proposes, as a method of solving such problem, a technique in setting of network environment, which can be readily set by even end users without high know-how (see Patent document 1).

Also, JP-A-6-175827 proposes a technique of automatically creating the setting of an environment, in which a program is implement on a computer, to eliminate a need for end users to make a troublesome setting of an environment (see Patent document 2).

Further, JP-A-11-161604 discloses a technique, in which setting of an environment for clients connected in networks is preserved as a script file in a server connected in networks to be automatically downloaded for setting of environment (see Patent document 3).

Meanwhile, it is supposed as in computer systems in recent years that since an operational environment with GUI is facilitated, set modification is readily made to generate an unexpected equipment trouble even in the case where supervisors performing setting operations do not have an adequate skill. JP-A-2000-181687 discloses, as a delineation for prevention of such unauthorized operation, a technique, in which system management information is preserved in two memories and an error is avoided by taking measures for referring to one of the memories in the case where an error is present after system management information in the other of the memories is edited, and a technique, in which password is demanded at the time of edition and thus system management information is preserved safely (see Patent document 4).
[Patent document 1] JP-A-5-128032
[Patent document 2] JP-A-6-175827
[Patent document 3] JP-A-11-161604
[Patent document 4] JP-A-2000-181687

However, in modifying setting of environment and structure of an information processing apparatus, operations in the modified environment are in some cases which are not incompatible with those performed in previous environment and structure. For example, in the case where a structure of storage areas in a storage device is modified, there can be a fear that operations after the modification becomes ones, in which data is written into areas in positions essentially unsuitable for writing.

In particular, in structural modification such as setting of storage areas of a storage device, written data must be guaranteed also in the case where a next structural modification is made. Such problem cannot be coped with in that password management disclosed in JP-A-2000-181687, in which it suffices to divide an environment to provide environments, which are made no use of by users. Also, in order to avoid the risk of data loss or the like, a demand is increased to desire to confirm whether script composed of data created for setting modification and a command group is guaranteed in operation.

Meanwhile, there are caused cases where it is desired to return to a previous state for some reasons, also in a situation, in which device environments enlarge. When taking storage devices or the like as an example, past data is in some cases released due to some faults. At such time, there is also a demand for returning to that environment/structure at a point of time when data being released was accumulated.

A load balancing method on physical disk storage devices by monitoring and exchanging locations on logical disk volumes is disclosed in EP-A-1085406. A method for verification the authenticity of electronic documents is disclosed in US 2002/080417 A1.

### SUMMARY OF THE INVENTION

The invention has been thought of on the basis of the above and other points of view, and provides a highly reliable storage control device, in which when a command group relating to configuration information of a storage is received, approval or denial of execution of commands is determined.

To solve the above problem, a first embodiment of the invention provides a storage device to receive demands for write and readout of data from host devices to control write and readout of data from storage media, the storage device comprising a service processor for setting of configuration information of the storage device, and a terminal device connected to the service processor via a private line to send a command group, which is received from an operator and related to the configuration information of the storage device, to the service processor, and wherein the service processor comprises means for determining approval or denial of execution of the command group prior to execution of the command group received from the terminal device.

Further, the terminal device in the invention sends encryption command information, which is given by encrypting the command group with a secret key, together with the command group when the command group is sent, and the determining means decrypts the received encryption command information to determine whether a command group obtained by the decryption corresponds to the received command group, and executes the command group in the case of correspondency.

Meanwhile, a method of setting configuration information of the storage device configured in the above manner comprises a first step of sending the command group via the terminal device, a second step, in which the service processor receives the command group sent in the first step and determines approval or denial of execution of the command group, and a third step of executing the command group in the case where approval of execution is determined in the second step.

In the device constituted thus, more preferably, there is provided a step of using a secret key to encrypt the command group sent in the first step prior to sending thereof to the service processor to generate encryption command information, the encryption command information together with the command group is sent to the service processor in the first step, in the second step the processor decrypts the received encryption command information to generate the command group to make a comparison as to whether the received command group and the command group obtained by the decryption correspond to each other, thus determining approval or denial of execution of the received command group, and in the third step the processor executes the command group in the case where the command group obtained by the decryption and the received command group correspond to each other in the second step.

According to the invention, modification of much configuration information can be collectively made with the use of a script sheet. Also, a script sheet is read by other devices whereby such setting can be applied to a plurality of storages. Further, since the storage device functions not to modify its structure for other script sheets than one authenticated, the structure of the storage device can be modified by information, which is set by a reliable operator and an operation program, whereby it is possible to provide a safe setting modification environment free from mistakes.

Also, since communication is possible with an input interface separate from an interface connected to the host computer, setting can be made without connection to the host computer. Owing to this, even when OS (operating system) of the host computer is not started up, a script sheet makes it possible to collectively set configuration information of the storage device and to make a setting for connection between the storage and the host computer itself.

Furthermore, unlike a device, of which operational environment is switched over by a plurality of operators to be used, history of operational environment and device configuration information is accumulated in a device for continuous information processing, so that means can be provided to be effective in the case where a state is restored when fault is generated and in the case where the reason for generation of fault itself is traced. There is an advantage that an operator can execute operations of large amount at a time.

Other features and objects of the invention than those described above will become apparent when reading the descriptions herein with reference to the accompanying drawings.

### BRIEF DESCRIPTION OF THE DRAWINGS

The following descriptions together with the accompanying drawings should be referred to for the purpose of completely understanding the invention and advantages thereof.
Fig. 1 is a view showing a configuration of an embodiment of the invention;
Fig. 2 is a flowchart illustrating a procedure in an example according to the invention;
Fig. 3 is a flowchart illustrating the procedure according to the invention;
Fig. 4 is a flowchart illustrating the procedure according to the invention;
Fig. 5 is a flowchart illustrating the procedure according to the invention;
Fig. 6 is a view showing an example of a format sheet according to the invention; and
Fig. 7 is a flowchart illustrating the procedure according to the invention.

### DETAILED DESCRIPTION OF THE PREFERRED EMBODIMENTS

At least the following matters will become apparent from the descriptions herein and the accompanying drawings.

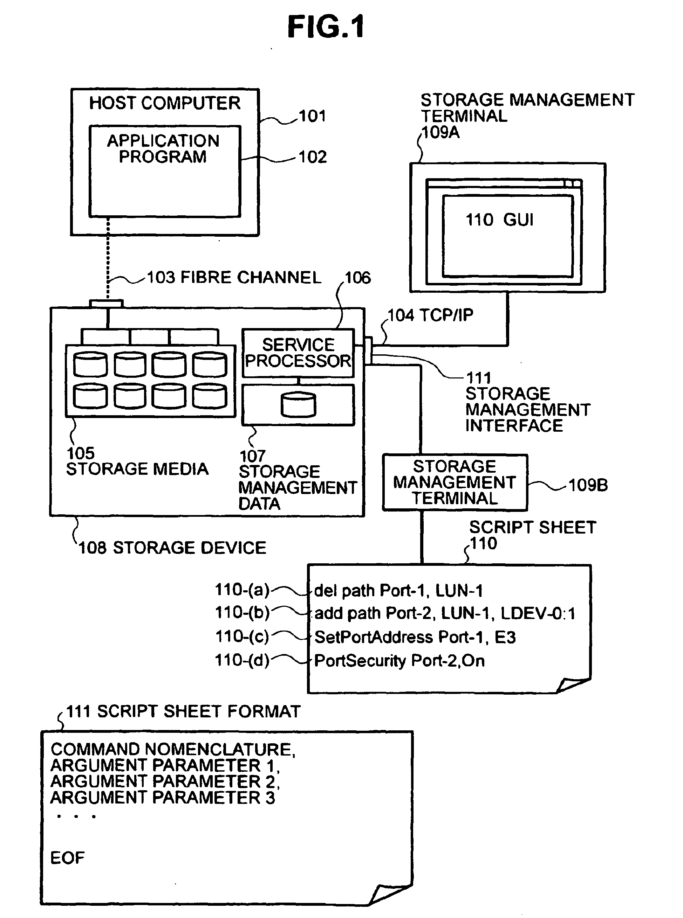

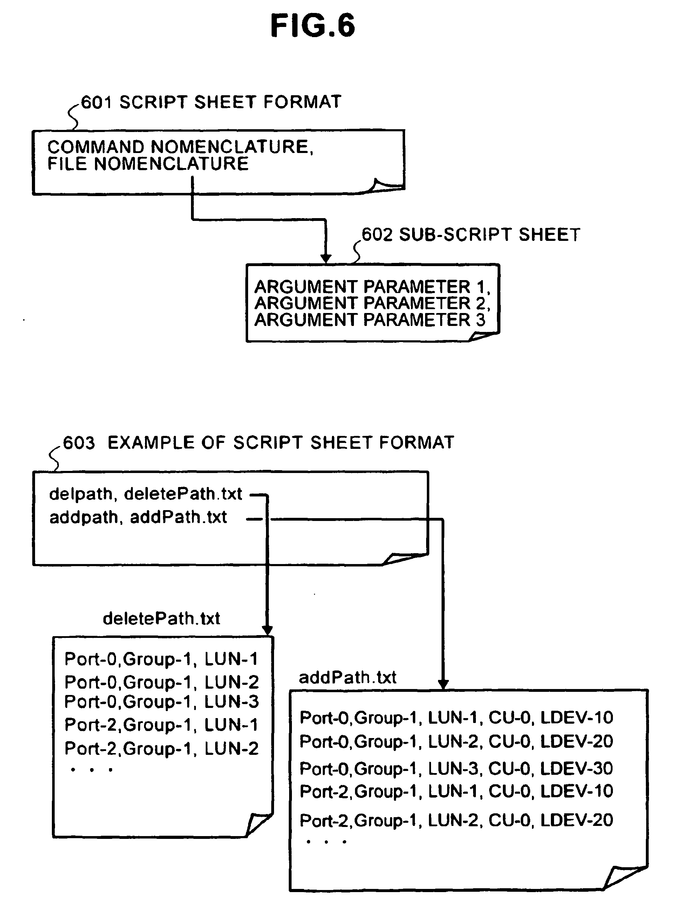

An example of embodiments of the invention will be described with reference to Figs. 1 to 6.

Fig. 1 is a schematic view showing connection in a storage system 100 being a kind of information processing apparatuses. A storage device 108 is connected to a host computer 101 via a fibre channel 103 to input and output data to storage media 105 on the basis of a command from the host computer 101. An application program 102 is software to operate on the host computer.

A storage management terminal 109A is connected via LAN to create configuration information of the storage device 108 to send the same to the storage device. Configuration information of storage means various settings in a storage device and contains, for example, setting of logic volumes virtually divided on the storage media 105.

In this example, the storage management terminal 109A is connected to the storage device 108 by means of TCP/ IP protocol. Control information from the storage management terminal 109A is sent and received between a service processor 106 loaded in the storage device 108 and a GUI application 110 acting in the storage management terminal 109A.

Meanwhile, with the embodiment of the present application, a further storage management terminal 109B is connected to the service processor 106 via a storage management interface 111.

An operator sends control information, such as configuration information or the like, to the service processor 106 in the storage device 108 via the storage management terminal 109B, and the service processor 106 updates a storage management data 107 on the basis of the control information and resets the structure of the storage. Meanwhile, the service processor monitors an operating condition of the storage device to send the information to the storage management terminals A, B via the storage management interface 111 and a TCP/IP 104. An operator can recognize from the information received at the storage management terminals A, B whether an optimum structure of the storage device has been set.

Conventionally, configuration information of the storage device 108 has been set on a GUI screen 110 displayed on storage management terminals. According to the invention, however, a script sheet is utilized in place of, or in addition to such operation on such GUI screen. A script sheet referred to here means a command group, with which a service processor sets a structure of a storage device, and may contain variables required for execution of commands. Such command group is also called a script definition file, and a processor sequentially reads commands defined in a script to interpret and execute the same.

Concretely, a script language is used to describe commands and parameters thereof required for modification of setting of that structure of the storage device, which is created by operating a GUI application program for modification of structure, acting on the storage management terminal A, or B. The service processor reads such script sheet to interpret and execute commands described therein.

Described in the script sheet 110 are operations relating to addition and deletion of such path definition information for connection of the host computer 101 and the logic volume of the storage device 108, as 110-(a) and 110-(b) in Fig. 1.

Additionally described in the script sheet are operations for setting and changing addresses of Fibre Channel Ports, or making security switches of the Fibre Channel Ports ON/OFF, the operations being described as in 110(a) to 110(d).

A script sheet 111 shown in Fig. 1 is an example, in which a setting procedure is written, and describes respective settings as argument parameters for set nomenclatures and information required for setting thereof, and the script sheet 110 in this example has the following meaning.
In 110-(a), a path defined in LUN (Logical Unit Number) 1 of Fibre Channel Port 1 is deleted.
In 110-(b), a path defined in LUN (Logical Unit Number) 1 of Fibre Channel Port 2 is added, and ID of logic volume, to which the host computer has access, is made 1-1.
In 110-(c), a Fibre Address of Fibre Channel Port 1 is made E3, and in 110-(d), a security switch of Fibre Channel Port 2 is made OFF to impose restrictions on access from the host computer.

Such descriptions enables modification of the structure in large quantities to be read and executed by a CPU of a computer for processing, instead of being set in a key input and a mouse on GUI operation by an operator.

Sheet format can be dealt with through decomposition into a plurality of sections and comprehensible descriptions. More specifically, a system of referring to sub-script sheets every set nomenclature and defining therein argument parameters required for operations may serve. While this system involves a plurality of sheets, description is facilitated because parameters are regularly described every setting.

601 is an example of a script sheet structure affording convenience in the case where commands described in a script sheet include a plurality of argument parameters. This example is effective in the case where the same setting is frequently used for argument parameters. A script sheet 603 defines a command "delpath" to mean deletion of paths communicated to respective logic units of a port group described in a subsequent text file "eletePathe.txt".

Hereupon, the embodiment is configured such that information in a script sheet is not sent to the storage device 108 via the fibre channel 103 but is physically interpreted through the storage management interface 111, which constitutes a logically different interface, by the service processor.

That is, the reason for this is that since the system of setting via the fibre channel 103 cannot use a script sheet unless the fibre channel 103 connects to the storage and the host computer 101, setting of configuration information is made impossible in the case where the host computer 101 is not started up and in the case where an operating system of the host computer 101 overruns.

Also, those troublesome settings, such as setting of addresses of ports for connection, or the like, in large quantities, which should be done by connection to the host computer 101, are impossible with a method of interpreting and executing a script sheet on the assumption that operations with the host computer 101 are done. Through the storage management interface 111, the script sheet 110 enables setting irrespective of connection or non-connection to the host computer connected to the storage device 108.

Meanwhile, while the script sheet 110 enables setting in large quantities, the script sheet itself constitutes a text data, so that it can be easily tampered with, and it is difficult to determine whether it has been tampered with. Also, in the case where an error is present in a script file once set, it is difficult to return the file to an original. In the invention, the following contrivance is made so as to solve the problem.

That is, a structure modifying module composed of the storage management terminal 109A and the service processor 106 is configured to include a module for rejecting the script sheet 110 except that, to which electronic authentication is applied, a module for managing history information when configuration information is modified in the script sheet.

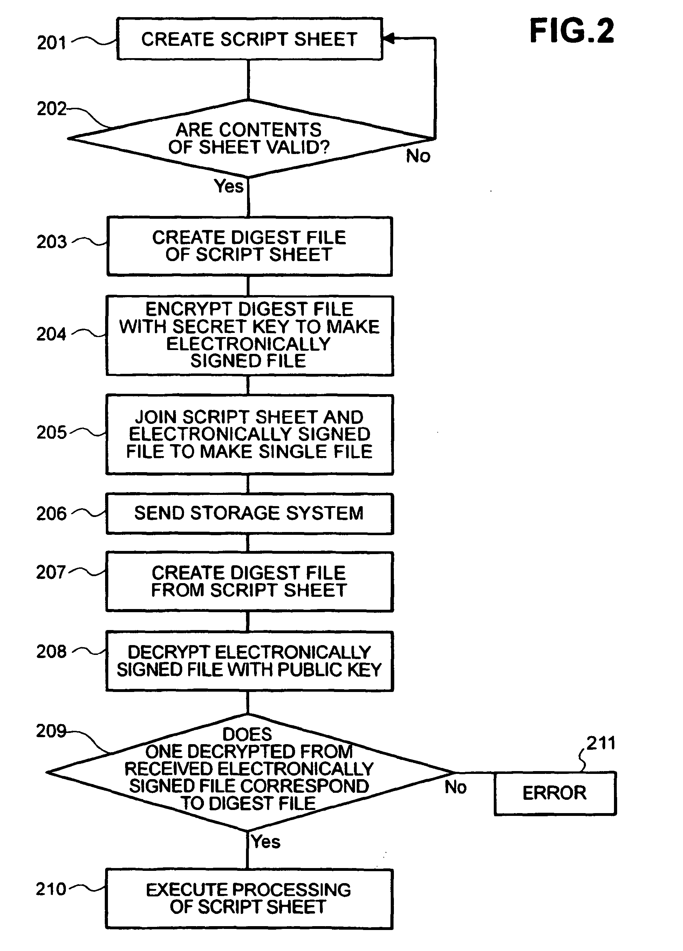

The module for rejecting the script sheet except that, to which authentication is applied, comprises the steps of creating a script sheet, which is guaranteed by a reliable operator as being a normal structure, and guaranteeing that no tampering with has been done before input into the storage device. Fig. 2 shows a concrete processing flow.

An operator creates a script sheet (201), confirms that contents of the sheet are valid (202), and starts an electronic authentication processing for guaranteeing rightfulness when the contents are valid.

Here, validity of data may be conf igured such that a script sheet is temporarily set to the service processor and a microprogram loaded on the service processor checks contents of the script sheet comparing them with a physical structure of the storage device, or can be configured such that consistency of data is checked by reliable software. Here, such reliable software indicates one created by a person having a secret key in the subsequent encryption processing.

Also, checking of consistency means checking presence and absence of an structural inconvenience that, for example, a newly set logic volume is one, setting of which is impossible on an actually loaded storage medium.

Also, it is possible to check, in addition to an structural inconvenience in the storage, whether information set in the sheet meets with a demand (electronic file according to specifications demanded by a customer, or the like) of a customer. In this case, it suffices to determine whether a file, which a customer writes data into a necessary column to create, is consistent with contents of a script sheet, which is created by an operator.

In the case where validity of a script sheet is confirmed and it is determined that the script sheet is valid, an authentication processing is executed to show that the script sheet is proper. Creation of a script sheet, confirmation of validity, and the authentication processing are made by the use of the storage management terminals A, B but may be made by the use of other information processing apparatuses.

Subsequently, there is illustrated a procedure for confirming that a script sheet, which has been created in the processings and validity of which has been checked, has undergone checking of validity and is reliable.

In the example, a digest file, in which a script sheet is digested, is created (203). A digest file depends upon information in a script sheet, and is created for that script sheet, checking of validity of which has been terminated in STEP 202, in order to show that validity of the script sheet has been guaranteed in STEP 202.

Such digest file may be created as by compressing a script sheet. Anybody can create such digest file from a script sheet with a very simple algorithm.

Accordingly, such digest file serves as at least a standard for termination of checking of validity (203).

Subsequently, an operator who intends for setting a structure of the storage device 108 by means of such digest file creates a file by encrypting the digest file with a secret key (204). That is, since a file obtained in STEP 204 cannot be created by others than an operator having a secret key, it can be dealt with as an electronically signed file.

An operator joins such electronically signed file and a script sheet together to make a file (205) to send the same to the service processor 106 of the storage device 108 (206). Of course, in this example, an electronically signed file, that is, a file obtained by encrypting a file, in which a script sheet describing a command group is digested, and the script sheet are sent as a single file but the script sheet and the electronically signed file may be separately sent to the service processor 106.

The service processor 106 having received the electronically signed file creates a digest file from the script sheet (207), and further creates a file by decrypting the electronically signed file (encryption) with a public key.

The service processor 106 makes a comparison between a file digested by the service processor itself and the file obtained by decrypting the encrypted electronically signed file with a public key (209).

That is, the service processor 106 makes a comparison between a digest file created from the script sheet and a digest file created by an operator who has a secret key. And when contents of the both files correspond to each other, it can be guaranteed that a sheet, which meets a customer' s demand and does not cause any inconvenience in setting of a structure, has been sent from a reliable operator.

Then, when the script sheet is guaranteed in STEP 209, the service processor 106 interprets the script sheet to perform setting of the storage device 108 in accordance with configuration information of the script sheet (210).

Here, an explanation will be given to encryption of a script sheet, or a file obtained by digesting a script sheet.

Here, a secret key system uses a technique, in which an operator, or a control device having a secret key (cord) uses the cord to encrypt information, and the encrypted information cannot be decrypted by other operators or control devices than those having the same secret key. Hereupon, by performing encryption in this system subsequent to the completion of validity checking, execution of commands in the service processor is permissible only with respect to that script sheet, which has been created by an operator having a secret key, thereby eliminating use of script sheets being tampered, or inappropriate script sheets in modification of configuration information.

In addition, while the procedure of creating a digest file to encrypt the same has been described in the example, there is a method of directly encrypting a script sheet with a secret key, in which method any digest file is not created. In this case, encrypted information and a script sheet are sent to the service processor 106. And the service processor 106 decrypts the encrypted information with a secret key to create a script sheet, and makes a comparison between the created script sheet and the received script sheet, whereby it is possible to recognize that the script sheet is valid and has been sent through a reliable procedure.

In the case where a digest file is once created, in addition to an effect that time taken in transmission and reception between the storage management terminal 109B and the service processor 106 is shortened, what is a command group being transmitted can be also made easy to recognize, by creating the digest file in a manner to indicate a feature of equipment structure.

Also, by providing two stages, that is, the step of digesting a script sheet and the step of encryption with a secret key as in the example, it is indicated that a digested script sheet is one having undergone checking of validity, so that, for example, an operator can perform a stepwise management, in which a most appropriate one is extracted among a plurality of digested files and encrypted with a secret key, which is owned by the operator, to be sent to the service processor 106.

In addition, by specifying an operator or operators having a secret key, only a reliable operator or operators, or an enterprise or enterprises can provide a script sheet in operation. Also, a reliable operation may be configured to apply automatic encryption with a secret key after validity checking is performed by not only an operator but also a reliable enterprise, or reliable software.

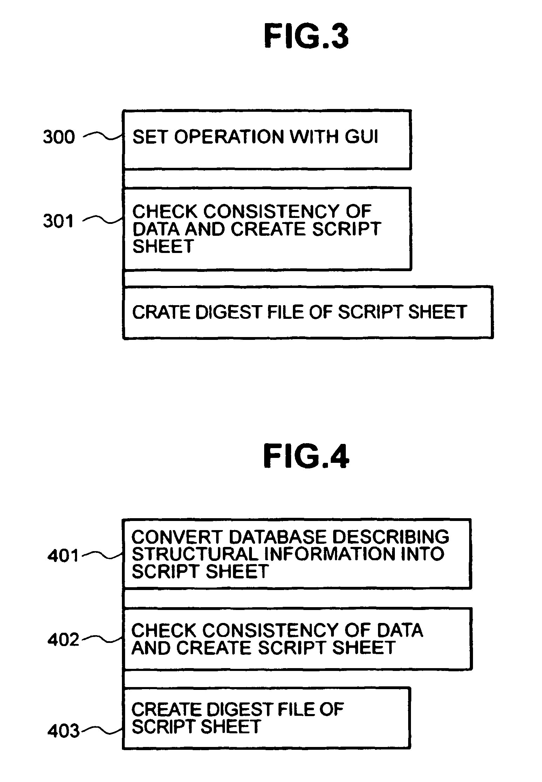

Fig. 3 shows an example, in which an electronic signature is applied after a software checks data of configuration information modified by the GUI operation performed by an operator and guarantees that the data affords consistency.

More specifically, an operator carries out an operation by the use of a GUI screen for setting of configuration information of the storage management terminal 109A. The GUI program beforehand loads thereon a consistency monitoring function so as to prevent an inappropriate setting in a storage device, and is configured to impose restrictions such that logic volumes of different volume sizes are not selected as a pair.

In this manner, contents of a script sheet can be guaranteed by applying a secret key to only a script sheet created in a setting operation with specified software and encrypting the script sheet with the secret key.

Fig. 4 shows an example, in which information is read from a database, in which configuration information is recorded, via the storage management terminal 109, and a software checks consistency of data in the read information to convert the information into a script sheet to apply thereon an electronic signature. Here, in the case where a database itself is reliable, there may be also applied a method of checking whether information has been taken out from the database and thus checking whether the configuration information is reliable.

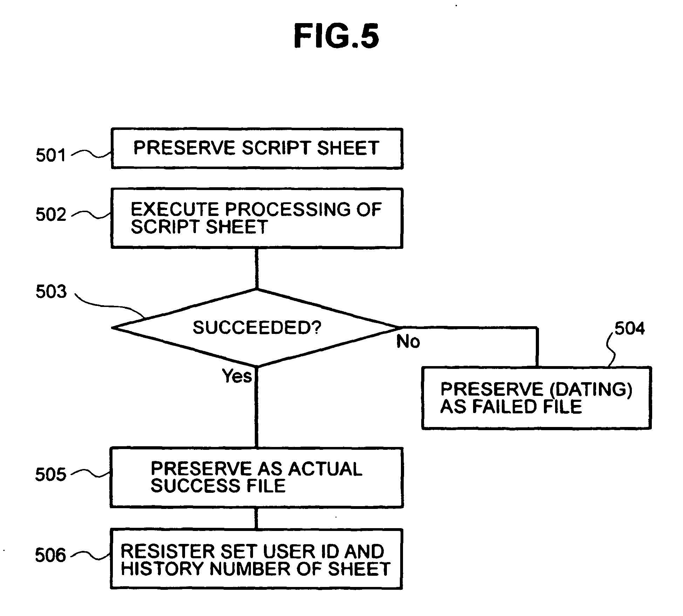

Meanwhile, a mechanism for managing history information when configuration information is modified in a script sheet will be described in detail with reference to a processing flow shown in Fig. 5.

With this method, it is possible to return to a desired state in the case where it is demanded to return to a past state after modification in large quantities is once made by a script sheet.

First, data described in a script sheet is read by the service processor 106 (501). Subsequently, the service processor 106 interprets those commands on the script sheet, which have been read in STEP 501, and executes a processing therefor (502).

In the case where the processing is successful, the script sheet is preserved, as one having a proven success, in a storage management data 107, and at the same time, a history management number and a user ID are registered in the sheet so that when setting is made and who makes setting can be known.

Data used in this registration can be also input by an operator when the script sheet is read. Also, when the script sheet is created, an operating software therefor can be also used to preserve the data in the script sheet.

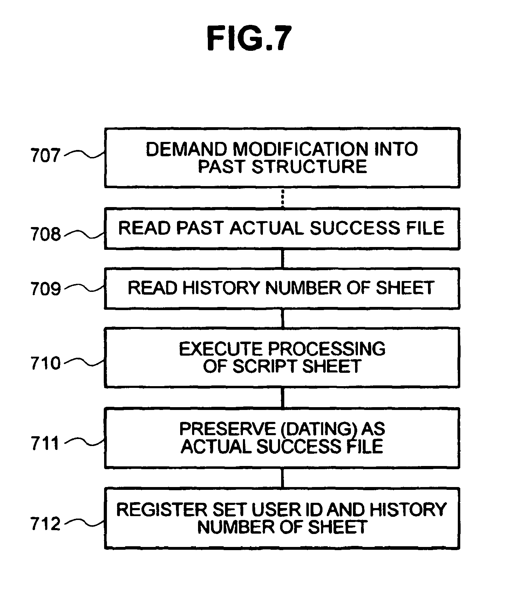

Thereby, when a demand (707) for modification to a past structure is made as shown in Fig. 7, an operator inputs a history management number corresponding to the configuration information to have the service processor executing a structure modifying processing described in a concerned script sheet, thus enabling returning to an original configuration information.

Concretely, an operator inputs a history management number via the storage management terminal 109. The service processor 106 refers to the storage management data 107 in the storage device 108 to read a script sheet corresponding to the history management number to execute a processing therefor. Thereafter, a data of that date and hour, at which the script sheet is executed, is added to the script sheet to be accumulated as a storage management data.

In addition, it goes without saying that a script sheet referred to here is a group of information and commands for modification of configuration information and a configuration thereof can be variously designed.

In other words, according to the invention, in the case where a command group and parameters required for execution of commands, with which configuration information is modified, are given from outside by the service processor, the service processor can check validity of the commands to execute them.

Also, the command group is encrypted to create encryption command information, both the encryption command information and the command group are sent to a processor for execution of the processing, the processor having received such information decrypts the encryption command information to compare the same with the received command group, and it is determined on the basis of results of such comparison whether the received command group can modify configuration information of the device safely.

Also, by providing a correlation between commands used in script description and commands, which the service processor actually interprets and executes, an instruction in that expression, which an operator can easily understand, can be given to the service processor. Also, taking account of an unauthorized operation supposed in the case of achieving convenience through such simplification, the service processor is configured to incorporate a processing for determining whether the script sheet is safe for the device. In the case where the script sheet has been authenticated, the service processor receives the commands to execute a processing for modification of a structure.

While the preferred embodiments of the invention have been described in detail, it should be understood that the embodiments are susceptible of various changes, replacement, and modifications without departing from the scope of the invention described in the appended claims.

## Claims

1. A storage device (108) to receive demands for writing and reading data from host devices (101) to control writing and reading data from storage media (105), the storage device comprising:
a service processor (106) configured to set configuration information of the storage device, and
a terminal device (109A) connected to the service processor via a private line to send a command group, which is received from an operator and related to the configuration information of the storage device, to the service processor, the terminal device creating a digest of the command group after determining that the command group is valid, the terminal device using a secret key to encrypt the digest created, and sending to the service processor digest data of the digest encrypted using the secret key and the command group
wherein the service processor is adapted to decrypt the encrypted digest data received and to compare the decrypted digest data with digest data of the digest created from the received command group and to determine approval or denial of execution of the command group based on results of comparison between the decrypted digest data and the digest data of the digest created from the command group, prior to execution of the command group received from the terminal device.

2. The storage device according to claim 1, wherein the command group is used by the service processor to set the configuration of the storage device.

3. The storage device according to claim 1, wherein the command group contains variables required for execution of commands by the service processor.

4. The storage device according to claim 1, wherein the command group is described on a script sheet.

5. The storage device according to claim 4, wherein the script sheet includes a group of operations relating to addition and deletion of path definition information for connection of a host device and logical volumes of the storage device.

6. The storage device according to claim 5, wherein the script sheet includes a setting procedure that describes respective settings as argument parameters for setting nomenclatures and information required for setting thereof.

7. The storage device according to claim 4, wherein the script sheet including the command group is determined to be valid by a reliable operator guaranteeing that no tampering has occurred before input into the storage device.

8. The storage device according to claim 4, wherein the digest is created by compressing the script sheet containing the command group.

9. A method of setting configuration information of a storage device to receive demands for writing and reading of data from host devices to control writing and reading of data from storage media, the storage device comprising a service processor and a terminal device connected to the service processor via a private line to send a command group, which is received from an operator and related to the configuration information, to the service processor, the method comprising
sending the command group via the terminal device;
receiving the command group sent at the service processor;
creating (203) a digest of the command group when the command group is determined to be valid;
using (204) a secret key to encrypt the created digest,
sending (205, 206) by the terminal device to the service processor the digest encrypted using the secret key and the command group;
creating (207) a digest from the command group received by the service processor;
decrypting (208) the encrypted digest received by the service processor to compare the decrypted digest with the digest created from the command group received by the service processor; and
executing (209, 210) the command group for setting configuration information of the storage device in the case where results of comparison between the decrypted digest and the digest created from the command group indicate correspondency.

10. The method according to claim 9, wherein the command group is described on a script sheet.

## Patentansprüche

1. Speichereinrichtung (108) zum Empfangen von Daten-Schreib/Lesebefehlen von Host-Geräten (101) zum Steuern des Schreibens und Lesens von Daten in/aus Speichermedien (105), wobei die Speichereinrichtung aufweist:
einen Arbeitsprozessor (106), der zur Einstellung von Konfigurationsinformationen der Speichereinrichtung konfiguriert ist, und
ein über eine private Leitung an den Arbeitsprozessor angeschlossenes Terminal (109A) zum Senden einer von einer Bedienungsperson empfangenen, auf die Konfigurationsinformation der Speichereinrichtung bezogenen Befehlsgruppe an den Arbeitsprozessor, wobei das Terminal aus der Befehlsgruppe nach Feststellung, daß sie gültig ist, einen Auszug erzeugt, den erzeugten Auszug unter Verwendung eines geheimen Schlüssels verschlüsselt und an den Arbeitsprozessor Auszugsdaten des unter Verwendung des geheimen Schlüssels und verschlüsselten Auszugs und die Befehlsgruppe sendet,
wobei der Arbeitsprozessor so ausgelegt ist, daß er die empfangenen verschlüsselten Auszugsdaten entschlüsselt, mit Auszugsdaten des aus der empfangenen Befehlsgruppe erzeugten Auszugs vergleicht und aufgrund dieses Vergleichs die Bestätigung oder Ablehnung der Ausführung der Befehlsgruppe bestimmt, bevor er die von dem Terminal empfangene Befehlsgruppe ausführt.

2. Speichereinrichtung nach Anspruch 1, wobei die Befehlsgruppe von dem Arbeitsprozessor verwendet wird, um die Konfiguration der Speichereinrichtung einzustellen.

3. Speichereinrichtung nach Anspruch 1, wobei die Befehlsgruppe zur Ausführung von Befehlen durch den Arbeitsprozessor erforderliche Variable enthält.

4. Speichereinrichtung nach Anspruch 1, wobei die Befehlsgruppe auf einem Skriptblatt beschrieben ist.

5. Speichereinrichtung nach Anspruch 4, wobei das Skriptblatt eine Gruppe von Operationen enthält, die sich auf das Hinzufügen und Löschen von Pfaddefinitions-Informationen zum Verbinden eines Host-Gerätes mit logischen Bereichen der Speichereinrichtung beziehen.

6. Speichereinrichtung nach Anspruch 5, wobei das Skriptblatt eine Einstellprozedur enthält, die jeweils Einstellungen als Argumentparameter zur Einstellung von Nomenklaturen und für deren Einstellung erforderlichen Informationen beschreibt.

7. Speichereinrichtung nach Anspruch 4, wobei das die Befehlsgruppe enthaltende Skriptblatt von einer zuverlässigen Bedienungsperson, die garantiert, daß vor Eingabe in die Speichereinrichtung keine Manipulation stattgefunden hat, als gültig bestimmt wird.

8. Speichereinrichtung nach Anspruch 4, wobei der Auszug durch Komprimieren des die Befehlsgruppe enthaltenden Skriptblattes erzeugt ist.

9. Verfahren zum Einstellen von Konfigurationsinformationen einer Speichereinrichtung zum Empfang von Daten-Schreib/Lesebefehlen von Host-Geräten zum Steuern des Schreibens und Lesens von Daten in/aus Speichermedien, wobei die Speichereinrichtung einen Arbeitsprozessor und ein an diesen über eine private Leitung angeschlossenes Terminal zum Senden einer von einer Bedienungsperson empfangenen, auf die Konfigurationsinformationen bezogenen Befehlsgruppe an den Arbeitsprozessor aufweist, wobei
die Befehlsgruppe über das Terminal gesendet wird,
die gesendete Befehlsgruppe an dem Arbeitsprozessor empfangen wird,
ein Auszug aus der Befehlsgruppe erzeugt wird (203), wenn diese als gültig ermittelt worden ist,
der erzeugte Auszug unter Verwendung eines geheimen Schlüssels verschlüsselt wird (204),
der unter Verwendung des geheimen Schlüssels verschlüsselte Auszug und die Befehlsgruppe von dem Terminal an den Arbeitsprozessor gesendet wird (205, 206),
aus der von dem Arbeitsprozessor empfangenen Befehlsgruppe ein Auszug erzeugt wird (207),
der von dem Arbeitsprozessor empfangene verschlüsselte Auszug entschlüsselt wird (208), um den verschlüsselten Auszug mit dem Auszug zu vergleichen, der aus der von dem Arbeitsprozessor empfangenen Befehlsgruppe erzeugt wurde, und
die Befehlsgruppe zum Einstellen von Konfigurationsinformationen der Speichereinrichtung ausgeführt wird (209, 210), falls die Ergebnisse des Vergleichs zwischen dem verschlüsselten Auszug und dem aus der Befehlsgruppe erzeugten Auszug Übereinstimmung zeigen.

10. Verfahren nach Anspruch 9, wobei die Befehlsgruppe auf einem Skriptblatt beschrieben wird.

## Revendications

1. Dispositif de mémorisation (108) pour recevoir des demandes d'écriture et de lecture de données depuis des dispositifs hôtes (101) pour commander l'écriture et la lecture de données à partir de supports de mémorisation (105), le dispositif de mémorisation comportant :
un processeur de service (106) configuré pour établir des informations de configuration du dispositif de mémorisation, et
un dispositif terminal (109A) connecté au processeur de service via une ligne privée pour envoyer un groupe d'instructions, qui est reçu depuis un opérateur et lié aux informations de configuration du dispositif de mémorisation, au processeur de service, le dispositif terminal créant un résumé du groupe d'instructions après avoir déterminé que le groupe d'instructions est valide, le dispositif terminal utilisant une clé secrète pour crypter le résumé créé, et envoyant au processeur de service des données de résumé du résumé crypté en utilisant la clé secrète et le groupe d'instructions,
dans lequel le processeur de service est adapté pour décrypter les données de résumé crypté reçues et pour comparer les données de résumé décrypté à des données de résumé du résumé créé d'après le groupe d'instructions reçu et pour déterminer une approbation ou un refus d'exécution du groupe d'instructions d'après des résultats de comparaison entre les données de résumé décrypté et les données de résumé du résumé créé d'après le groupe d'instructions, avant l'exécution du groupe d'instructions reçu depuis le dispositif terminal.

2. Dispositif de mémorisation selon la revendication 1, dans lequel le groupe d'instructions est utilisé par le processeur de service pour établir la configuration du dispositif de mémorisation.

3. Dispositif de mémorisation selon la revendication 1, dans lequel le groupe d'instructions contient des variables requises pour l'exécution d'instructions par le processeur de service.

4. Dispositif de mémorisation selon la revendication 1, dans lequel le groupe d'instructions est décrit sur une feuille de script.

5. Dispositif de mémorisation selon la revendication 4, dans lequel la feuille de script inclut un groupe d'opérations concernant une addition et une suppression d'informations de définition de trajet pour une connexion d'un dispositif hôte et de volumes logiques du dispositif de mémorisation.

6. Dispositif de mémorisation selon la revendication 5, dans lequel la feuille de script inclut un procédé d'établissement qui décrit des réglages respectifs en tant que paramètres d'arguments pour établir des nomenclatures et des informations requises pour leur établissement.

7. Dispositif de mémorisation selon la revendication 4, dans lequel la feuille de script incluant le groupe d'instructions est déterminée comme étant valide par un opérateur fiable garantissant qu'aucune falsification ne s'est produite avant l'entrée dans le dispositif de mémorisation.

8. Dispositif de mémorisation selon la revendication 4, dans lequel le résumé est créé en compressant la feuille de script contenant le groupe d'instructions.

9. Procédé d'établissement d'informations de configuration d'un dispositif de mémorisation pour recevoir des demandes d'écriture et de lecture de données depuis des dispositifs hôtes pour commander l'écriture et la lecture de données à partir de supports de mémorisation, le dispositif de mémorisation comportant un processeur de service et un dispositif terminal connecté au processeur de service via une ligne privée pour envoyer un groupe d'instructions, qui est reçu depuis un opérateur et lié aux informations de configuration, au processeur de service, le procédé comportant les étapes consistant à :
envoyer le groupe d'instructions via le dispositif terminal,
recevoir le groupe d'instructions envoyé dans le processeur de service,
créer (203) un résumé du groupe d'instructions lorsque le groupe d'instructions est déterminé comme étant valide,
utiliser (204) une clé secrète pour crypter le résumé créé,
envoyer (205, 206) par le dispositif terminal au processeur de service le résumé crypté en utilisant la clé secrète et le groupe d'instructions,
créer (207) un résumé d'après le groupe d'instructions reçu par le processeur de service,
décrypter (208) le résumé crypté reçu par le processeur de service pour comparer le résumé décrypté au résumé créé d'après le groupe d'instructions reçu par le processeur de service, et
exécuter (209, 210) le groupe d'instructions pour établir des informations de configuration du dispositif de mémorisation dans le cas où les résultats de comparaison entre le résumé décrypté et le résumé créé d'après le groupe d'instructions indiquent une correspondance

10. Procédé selon la revendication 9, dans lequel le groupe d'instructions est décrit sur une feuille de script.
